# EUROPEAN PATENT SPECIFICATION

(11) **EP 0 529 983 B1**
(45) Date of publication and mention of the grant of the patent: **05.06.1996**
(21) Application number: 92307688.9
(22) Date of filing: 21.08.1992
(51) Int. Cl.: F16K 31/66, F16K 11/24

(54) **Fluid mixing apparatus**
Mischvorrichtung für Fluide
Dispositif mélangeur pour fluides

(30) Priority: 24.08.1991 GB 9118317
(43) Date of publication of application: 03.03.1993
(73) Proprietor: CARADON MIRA LIMITED, Cheltenham Gloucestershire GL52 5EP (GB)
(72) Inventor: Lorton, Robert, Cheltenham, Gloucestershire GL52 6RQ (GB); Whale, Geoffrey Hawke, Nailsworth, Gloucestershire GL6 0NN (GB)
(74) Representative: Knowles, Audrey Elizabeth

(56) References cited:
- DE-A- 1 475 987
- DE-A- 3 106 377
- US-A- 2 305 151
- US-A- 2 830 766
- US-A- 2 935 086
- US-A- 2 978 181

## Description

This invention relates to fluid mixing apparatus and in particular, though not exclusively, apparatus for mixing hot and cold water in a water supply installation.

Mixing valves for mixing hot and cold water normally have a proportioning mechanism for controlling the admission of hot and cold water to a mixing chamber to provide blended water having a selected temperature.

The proportioning mechanism may be thermostatically controlled for adjusting the relative proportions of the hot and cold water admitted to the mixing chamber to maintain the selected temperature of the blended water constant.

The proportioning mechanism usually has sliding or rotatable elements which alter the flow areas and often considerable operating force is required to overcome friction from seals and mating surfaces.

DE-A-1475987 (& GB-B-1115987) discloses apparatus for mixing hot and cold water in which the hot and cold water supplies are controlled by respective on/off solenoid valves. Both valves are open when the mixed water temperature is between lower and upper limits. At temperatures below the lower limit the cold valve is closed and the hot valve is open. At temperatures above the upper limit, the hot valve is closed and the cold valve is open.

According to the present invention apparatus for mixing hot and cold water comprises respective flow control valves for hot and cold water, each valve having a flexible diaphragm movable relative to a valve seat between open and closed positions to control the flow of water admitted by the valve to a mixing chamber, means for adjustable selection of the mixed water temperature, means for sensing the mixed water temperature, means for comparing the selected and sensed water temperatures, means responsive to a difference between the sensed and selected temperatures for actuating both valves to maintain substantially constant the selected mixed water temperature characterised in that each valve is infinitely adjustable between the open and closed positions of the diaphragm to vary progressively the flow of water admitted to the mixing chamber, and the actuator means is operable in response to a detected difference between the sensed and selected temperatures to move the respective diaphragms to increase the flow of water admitted to the mixing chamber by one of the valves and to decrease the flow of water admitted to the mixing chamber by the other valve whereby the relative proportions of hot and cold water simultaneously admitted to the mixing chamber by the respective valves is adjusted to maintain the selected mixed water temperature substantially constant.

Preferably, each diaphragm has an associated pilot valve operable by the actuator means for controlling the water pressure differential between an inlet chamber and a control chamber on opposed sides of the diaphragm for adjusting the position of the diaphragm relative to the associated valve seating to vary the water flow.

Advantageously, the pilot valves are linked for operation by common actuator means. Alternatively, the pilot valves may be independent for operation by separate actuator means. The actuator means may be of any suitable type, for example fluid pressure, electronic, thermostatic, with a control loop from the sensor means.

Preferably, the or each actuator means comprises a solenoid having an energising coil and a plunger responsive to energisation of the coil for operating the or each pilot valve. The or each plunger may be provided with a balance pin for reducing any out of balance force tending to close the associated pilot valve.

Advantageously, the comparator means is operable to generate a control signal representative of a difference between the sensed and selected water temperatures for adjusting the energising voltage or current applied to the or each coil.

The invention will now be described in more detail, by way of example only, with reference to the accompanying drawings, wherein:-
FIGURE 1 shows schematically a first embodiment of fluid mixing apparatus according to the invention;
FIGURE 2 shows schematically a second embodiment of fluid mixing apparatus according to the present invention;
FIGURE 3 shows schematically a modification to the apparatus shown in Figures 1 and 2;
FIGURE 4 is a longitudinal cross-section of a mixing valve for hot and cold water in the closed or off position; and
FIGURE 5 is a longitudinal cross-section of the mixing valve shown in Figure 4 in an open or on position.

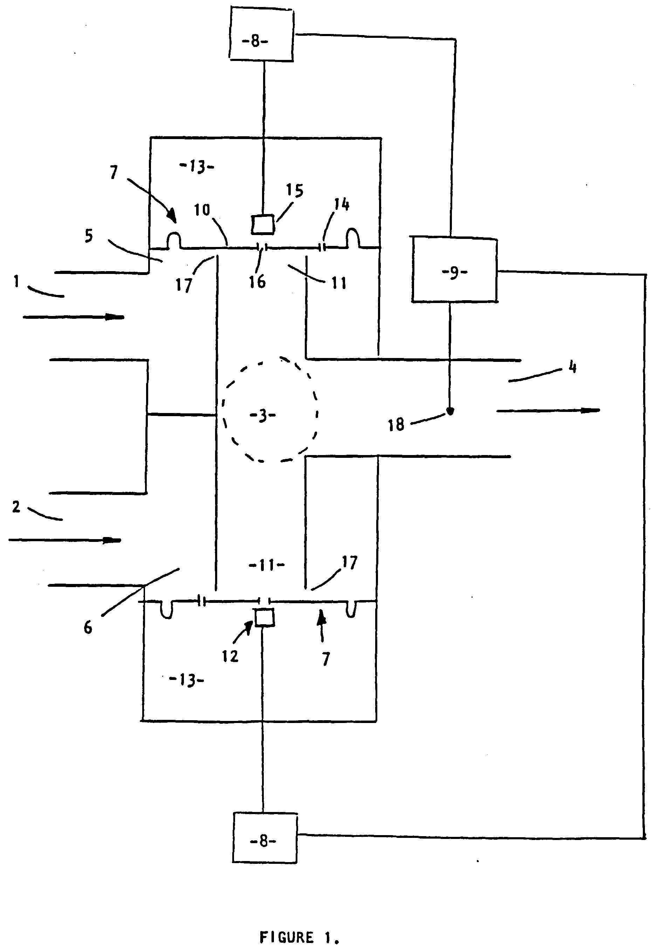

The fluid mixing apparatus shown in Figure 1 has separate inlets 1,2 for respective connection to supplies of hot and cold water, a mixing chamber 3 for mixing hot and cold water, and an outlet 4 for connection to an ablutionary appliance such as a bath or shower.

Each inlet 1,2 opens to a respective inlet chamber 5,6 housing a flow control valve 7. Each flow control valve 7 is operable by a respective actuating mechanism 8 controlled by an electronic control unit 9.

Both flow control valves 7 are similar and comprise a flexible diaphragm 10 movable relative to a transfer port 11 connecting the inlet chamber 5,6 to the mixing chamber 3 by a servo-mechanism 12 controlling the fluid pressure in a control chamber 13 connected to the inlet chamber 5,6 on the opposite side of the diaphragm 10 by a bleed hole 14.

The servo-mechanism 12 comprises a pilot valve 15 operable by the actuating mechanism 8 to open and close a control hole 16 in the diaphragm 10.

With the control hole 16 closed, the diaphragm 10 engages a valve seating 17 to close the transfer port 11 due to the increase in pressure in the control chamber 13.

On opening the control hole 16, the pressure in the control chamber 13 is reduced and the diaphragm 10 is displaced away from the valve seating to a balanced equilibrium position.

The actuating mechanism 8 is operable by the electronic control unit 9 to control movement of the pilot valve 15 to adjust the position of the diaphragm 10 to vary the flow rate of water admitted to the mixing chamber 3.

The actuating mechanisms 8 of both flow control valves 7 are controlled by the electronic control unit 9 to provide water having a set temperature selected by the user, and the control unit 9 is operable to maintain the set temperature constant by comparing the set temperature with that sensed by a sensor 18 located in the outlet 4 and operating the actuating mechanisms 8 in response to a temperature difference to vary the relative proportions of hot and cold water admitted to the mixing chamber 3 for eliminating the temperature difference.

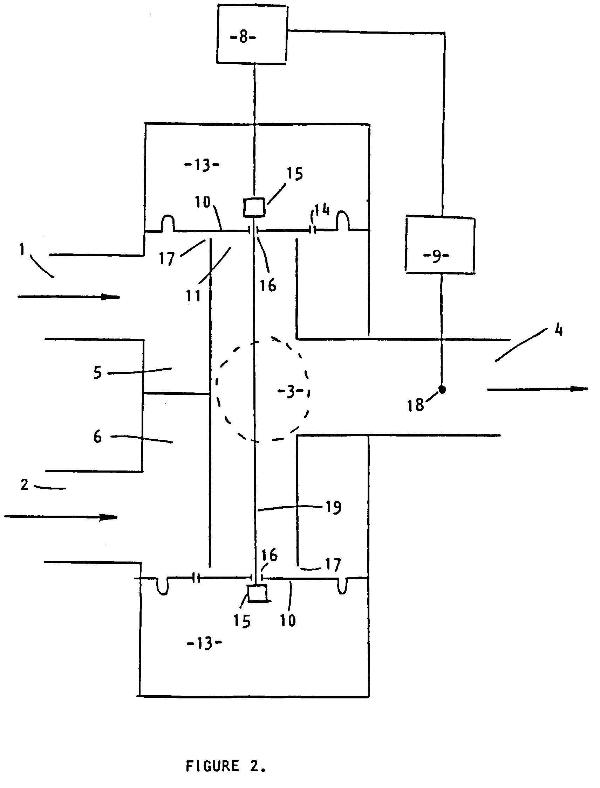

Figure 2 shows a modification to the apparatus shown in Figure 1 in which the pilot valves 15 of the servo-mechanisms 12 are linked by a rigid connecting wire or rod 19 for simultaneous adjustment of the hot and cold water diaphragms 10 by a common actuating mechanism 8 controlled by the electronic control unit 9. With this arrangement, opening movement of one diaphragm 10 is accompanied by closing movement of the other diaphragm 10 such that separate on/off control of the water flow is required.

In the above-described embodiments, movement of the diaphragms 10 to adjust the water flow is controlled by the pilot valves 15 and, for any given pressure relationship there is always an out of balance force which will tend to close the pilot valve 15 and consequently reduce the water flow from the associated inlet chamber 5,6 to the mixing chamber 3.

For certain applications, this out of balance force may be utilised to provide an inlet pressure compensation mechanism to maintain a substantially constant outlet flow for a range of inlet pressures.

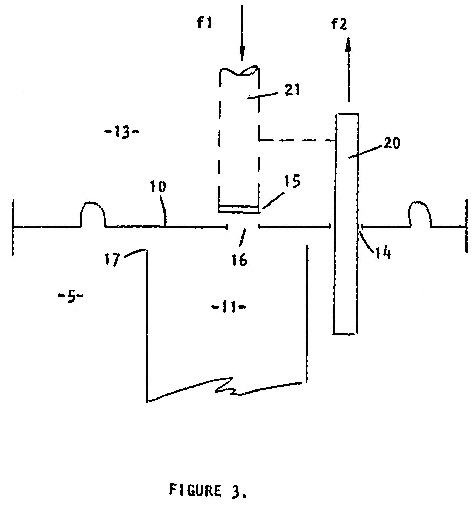

In certain applications, however, where the inlet pressures are high, this out of balance force may exceed the actuating force preventing the pilot valve 15 from opening. In this case, the out of balance force can be reduced or eliminated entirely by the use of a balance pin 20 as shown in Figure 3.

The balance pin 20 is connected to a plunger 21 of the pilot valve 15 and is arranged to extend through the bleed hole 14 of the associated diaphragm 10 so that the opposite ends are subjected to the pressures in the inlet chamber 5,6 and control chamber 13 respectively. As a result, use of a low force actuating mechanism in a high pressure valve is facilitated.

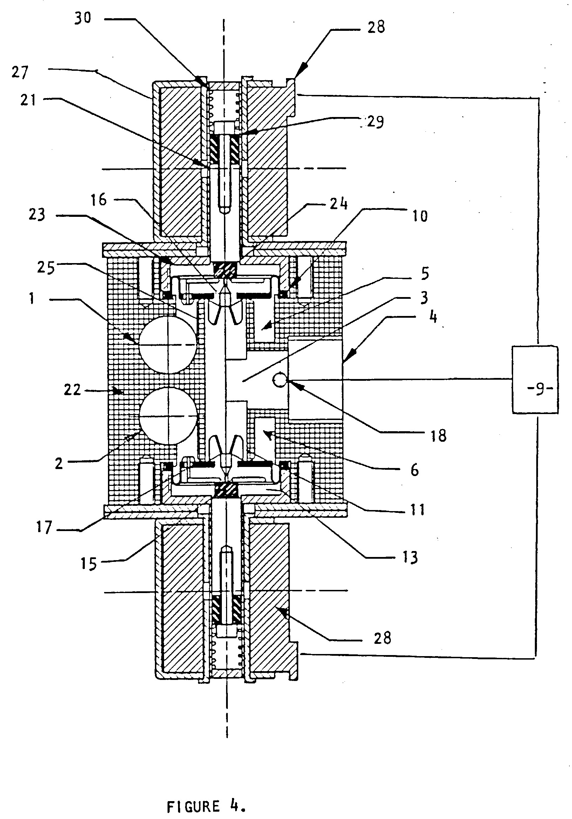

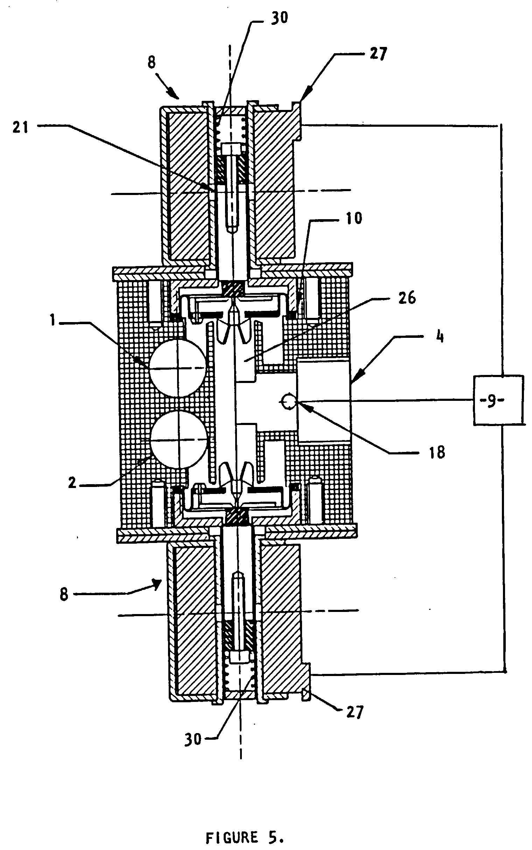

Referring now to Figures 4 and 5, application of the arrangement shown in Figure 1 to a mixing valve is shown wherein like reference numerals are used to indicate corresponding parts.

The valve has a body 22 provided intermediate its ends with the hot and cold water inlets 1,2 and the water outlet 4 at right angles thereto.

The inlets 1,2 open radially into respective annular inlet chambers 5,6 at opposed ends of the body 22.

The marginal edge of each diaphragm 10 is secured and sealed relative to the body 22 by a respective retaining member 23 defining therewith the control chamber 13 and having a central opening 24 for the plunger 21 of the associated pilot valve 15.

The transfer ports 11 and valve seatings 17 are formed by respective coaxial tubular bosses 25. The mixing chamber 3 is formed by a passage 26 connecting the bosses 25 and the outlet 4 is connected at right angles to this passage 26. In this way, the hot and cold water flows are completely mixed prior to passage over the temperature sensor 18 located in the outlet 4.

The actuating mechanisms 8 for the pilot valves 15 comprise respective solenoids 27 having an energising coil 28 and a magnet 29 associated with the plunger 21 of the pilot valve 15.

The control hole 16 of each diaphragm 10 is closed by the associated pilot valve 15 under the biasing of a return spring 30 when the solenoid 27 is de-energised causing the diaphragm 10 to engage the valve seating closing the transfer port 11 preventing water flow.

Energising the solenoid 27 displaces the pilot valve 15 against the biasing of the return spring 30 to open the control hole 16 causing the diaphragm 10 to move away from the valve seating to open the transfer port 11 allowing water flow.

By adjusting the energising voltage or current, the opening movement of the diaphragm 10 is controlled to vary progressively the water flow between closed and fully or open positions of the diaphragm.

The electronic control unit 9 is operable to compare the temperature sensed by the sensor 18 with a set temperature selected by the user to control the energising voltage or current to the solenoids 27 to maintain constant the set temperature by varying the relative proportions of hot and cold water admitted to the mixing chamber 3 in response to a detected difference between the set and sensed temperatures.

The invented mixing apparatus above-described has particular application to mixing hot and cold water for ablutionary appliances where accurate control of the temperature of the outflowing water is required, for example when showering.

The flow control valves may be incorporated in a single unit as described but this is not essential where there is no connecting link between the pilot valves. Thus, for certain applications, the flow control valves may be arranged in separate units for connection directly in the hot and cold water supplies with the outlet from each unit being connected for mixing the water and sensing the temperature. The use of such separate units provides increased flexibility for installation of the mixing apparatus.

## Claims

1. Apparatus for mixing hot and cold water comprises respective flow control valves (7) for hot and cold water, each valve (7) having a flexible diaphragm (10) movable relative to a valve seat (17) between open and closed positions to control the flow of water admitted by the valve (7) to a mixing chamber (3), means (9) for adjustable selection of the mixed water temperature, means (18) for sensing the mixed water temperature, means (9) for comparing the selected and sensed water temperatures, means (8) responsive to a difference between the sensed and selected temperatures for actuating both valves (7) to maintain substantially constant the selected mixed water temperature **characterised in that** each valve (7) is infinitely adjustable between the open and closed positions of the diaphragm (10) to vary progressively the flow of water admitted to the mixing chamber (3), and the actuator means (8) is operable in response to a detected difference between the sensed and selected temperatures to move the respective diaphragms (10) to increase the flow of water admitted to the mixing chamber (3) by one of the valves (7) and to decrease the flow of water admitted to the mixing chamber (3) by the other valve (7) whereby the relative proportions of hot and cold water simultaneously admitted to the mixing chamber (3) by the respective valves (7) is adjusted to maintain the selected mixed water temperature substantially constant.

2. Apparatus according to Claim 1 characterised in that each diaphragm (10) has an associated pilot valve (15) operable by the actuator means (8) for controlling the water pressure differential between an inlet chamber (5,6) and a control chamber (13) on opposed sides of the diaphragm (10) for adjusting the position of the diaphragm (10) relative to the associated valve seating (17) to vary the water flow.

3. Apparatus according to Claim 2 characterised in that the pilot valves (15) are linked for operation by common actuator means (8).

4. Apparatus according to Claim 2 characterised in that the pilot valves (15) are independent for operation by separate actuator means (8).

5. Apparatus according to Claim 3 or Claim 4 characterised in that the or each actuator means (8) comprises a solenoid (27) having an energising coil (28) and a plunger (21) responsive to energisation of the coil (28) for operating the or each pilot valve (15).

6. Apparatus according to Claim 5 characterised in that the or each plunger (21) is provided with a balance pin (20) to reduce any out of balance force tending to close the associated pilot valve (15).

7. Apparatus according to Claim 5 or Claim 6 characterised in that the comparator means (9) is operable to generate a control signal representative of a difference between the sensed and selected water temperatures for adjusting the energising voltage or current applied to the or each coil (28).

8. Apparatus according to any one of the preceding Claims characterised in that the flow control valves (7) are mounted in a single unit.

9. Apparatus according to any one of Claims 1 to 7 characterised in that the flow control valves (7) are mounted in separate units.

10. Apparatus according to any one of the preceding Claims characterised in that the mixing chamber (3) has opposed inlets (1,2) for the hot and cold supplies and a blended water outlet (4) normal thereto.

11. Apparatus according to Claim 10 characterised in that the sensor means (18) is located in the outlet (4).

12. Apparatus according to Claim 10 or Claim 11 characterised in that the outlet (4) is adapted for connection to an ablutionary appliance such as a shower or bath.

## Patentansprüche

1. Vorrichtung zum Mischen von Heiß- und Kaltwasser, mit entsprechenden Strömungssteuerventilen (7) für heißes und kaltes Wasser, von denen jedes Ventil (7) eine flexible Membran (10) aufweist, welche bezüglich eines Ventilsitzes (7) zwischen geöffneten und geschlossenen Positionen bewegbar ist, um die Strömung des durch das Ventil (7) in eine Mischkammer (3) eingelassenen Wassers zu steuern, ferner mit Einrichtungen (9) für eine einstellbare Wahl der Temperatur des gemischten Wassers, Einrichtungen (18) zum Erfassen der Temperatur des gemischten Wassers, Einrichtungen (9) zum Vergleichen der gewählten und der erfaßten Wassertemperaturen, Einrichtungen (8), welche auf einen Unterschied zwischen der erfaßten und der gewählten Temperatur anspricht, um beide Ventile (7) zu betätigen, um dadurch die gewählte Temperatur des gemischten Wassers im wesentlichen konstant zu halten, **dadurch gekennzeichnet**, daß jedes Ventil (7) stufenlos zwischen den geöffneten und den geschlossenen Positionen der Membran (10) verstellbar ist, um fortschreitend die Strömung des in die Mischkammer (3) eingelassenen Wassers zu ändern, und daß die Betätigungseinrichtung (8) in Abhängigkeit von einer erfaßten Differenz zwischen der erfaßten Temperatur und der gewählten Temperatur betätigbar ist, um die entsprechenden Membrane (10) zu bewegen, um dadurch die Strömung des in die Mischkammer (3) eingelassenen Wassers durch eines der Ventile (7) zu vergrößern, und die Strömung des in die Mischkammer (3) eingelassenen Wassers durch das andere Ventil (7) zu verringern, wodurch die relativen Anteile von heißem und kaltem Wasser, welche in die Mischkammer (3) durch die entsprechenden Ventile (7) eingelassen werden, verstellt werden, um die gewählte Temperatur des gemischten Wassers im wesentlichen konstant zu halten.

2. Vorrichtung nach Anspruch 1, dadurch gekennzeichnet, daß jede Membran (10) ein dazugehöriges Pilotventil (15) aufweist, welches durch die Betätigungseinrichtung (8) betätigbar ist, um das Druckdifferential des Wassers zwischen einer Einlaßkammer (5, 6) und einer Steuerkammer (13) auf einander gegenüberliegenden Seiten der Membran (10) zu steuern, um dadurch die Position der Membran bezüglich des dazugehörigen Ventilsitzes (17) zur Änderung der Wasserströmung zu verstellen.

3. Vorrichtung nach Anspruch 2, dadurch gekennzeichnet, daß die Pilotventile (15) betriebsmäßig durch eine gemeinsame Betätigungseinrichtung (8) miteinander gekoppelt sind.

4. Vorrichtung nach Anspruch 2, dadurch gekennzeichnet, daß die Pilotventile (15) betriebsmäßig durch getrennte Betätigungseinrichtungen (8) unabhängig voneinander sind.

5. Vorrichtung nach Anspruch 3 oder Anspruch 4, dadurch gekennzeichnet, daß jede Betätigungseinrichtung (8) ein Solenoid (27) mit einer Erregerspule (28) und einem Stößel (21) aufweist, welcher auf die Erregung der Spule (28) anspricht, um jedes der Pilotventile (15) zu betätigen.

6. Vorrichtung nach Anspruch 5, dadurch gekennzeichnet, daß der oder jeder Stößel (21) mit einem Ausgleichsstift (20) versehen ist, um jede außer Balance liegende Kraft zu reduzieren, welche die Neigung zeigt, das dazugehörige Pilotventil (15) zu schließen.

7. Vorrichtung nach Anspruch 5 oder Anspruch 6, dadurch gekennzeichnet, daß die Vergleichereinrichtung (9) betätigbar ist, um ein Steuersignal zu erzeugen, welches eine Differenz zwischen der erfaßten und der gewählten Wassertemperatur darstellt, um dadurch die Erregerspannung oder den Strom zu verstellen, der an die oder jede Spule (28) angelegt wird.

8. Vorrichtung nach einem der vorstehenden Ansprüche, dadurch gekennzeichnet, daß die Strömungssteuerventile (7) in einer einzelnen Einheit montiert sind.

9. Vorrichtung nach einem der Ansprüche 1 bis 7, dadurch gekennzeichnet, daß die Strömungssteuerventile (7) in getrennten Einheiten montiert sind.

10. Vorrichtung nach einem der vorstehenden Ansprüche, dadurch gekennzeichnet, daß die Mischkammer (3) einander gegenüberliegende Einlässe (1, 2) für die Zufuhr von heißem und kaltem Wasser und einen senkrecht hierzu stehenden Auslaß (4) für das gemischte Wasser aufweist.

11. Vorrichtung nach Anspruch 10, dadurch gekennzeichnet, daß die Sensoreinrichtung (18) in dem Auslaß (4) angeordnet ist.

12. Vorrichtung nach Anspruch 10 oder Anspruch 11, dadurch gekennzeichnet, daß der Auslaß (4) für den Anschluß an eine Waschvorrichtung, wie eine Dusche oder ein Bad, ausgebildet ist.

## Revendications

1. Appareil de mélange d'eau chaude et d'eau froide comprenant respectivement des vannes de commande d'écoulement (7) pour l'eau chaude et l'eau froide, chaque vanne (7) ayant un diaphragme flexible (10) mobile par rapport à un siège de vanne (17) entre une position d'ouverture et une position de fermeture pour commander l'écoulement d'eau admis par la vanne (7) dans une chambre de mélange (3), des moyens (9) pour une sélection réglable de la température de l'eau mélangée, des moyens (18) pour détecter la température de l'eau mélangée, des moyens (9) pour comparer la température de l'eau sélectionnée et la température de l'eau détectée, des moyens (8) sensibles à une différence entre la température de l'eau sélectionnée et la température de l'eau détectée afin de commander les deux vannes (7) pour maintenir sensiblement constante la température de l'eau mélangée sélectionnée, caractérisé en ce que chaque vanne (7) est infiniment réglable entre les positions de fermeture et d'ouverture du diaphragme (10) pour faire varier progressivement l'écoulement d'eau admis dans la chambre de mélange (3), et les moyens de commande (8) peuvent être actionnés en fonction d'une différence détectée entre la température de l'eau sélectionnée et la température de l'eau détectée pour déplacer les diaphragmes respectifs (10) afin d'augmenter l'écoulement d'eau admis dans la chambre de mélange (3) par l'une des vannes (7) et de diminuer l'écoulement d'eau admis dans la chambre de mélange (3) par l'autre vanne (7), de manière que les proportions relatives d'eau chaude et d'eau froide admises simultanément dans la chambre de mélange (3) par les vannes respectives (7) soient ajustées pour maintenir sensiblement constante la température de l'eau mélangée sélectionnée.

2. Appareil selon la revendication 1, caractérisé en ce que chaque diaphragme (10) a une vanne pilote associée (15) susceptible d'être actionnée par les moyens de commande (8) pour commander la différence de pression de l'eau entre une chambre d'entrée (5, 6) et une chambre de commande (13) sur les côtés opposés du diaphragme (10) afin d'ajuster la position du diaphragme (10) par rapport au siège de vanne associé (17) pour faire varier l'écoulement d'eau.

3. Appareil selon la revendication 2, caractérisé en ce que les vannes pilotes (15) sont connectées pour pouvoir être actionnées par des moyens de commande communs (8).

4. Appareil de commande selon la revendication 2, caractérisé en ce que les vannes pilotes (15) sont indépendantes pour pouvoir être actionnées par des moyens de commande séparés (8).

5. Appareil selon la revendication 3 ou 4, caractérisé en ce que le ou chaque moyen de commande (8) comprend un solénoïde (27) ayant une bobine d'excitation (28) et un plongeur (21) sensible à l'excitation de la bobine (28) pour actionner le ou chaque moyen de commande (15).

6. Appareil selon la revendication 5, caractérisé en ce que le ou chaque plongeur (21) est pourvu d'une broche d'équilibre (20) pour réduire toute force de déséquilibre qui tendrait à fermer la vanne pilote associée (15).

7. Appareil selon la revendication 5 ou 6, caractérisé en ce que les moyens de comparaison (9) sont à même de générer un signal de commande représentatif d'une différence entre la température de l'eau détectée et la température de l'eau sélectionnée pour régler la tension ou le courant d'excitation appliqué(e) à la ou chaque bobine (28).

8. Appareil selon l'une quelconque des revendications précédentes, caractérisé en ce que les vannes de commande de l'écoulement (7) sont montées sous la forme d'une seule unité.

9. Appareil selon l'une quelconque des revendications 1 à 7, caractérisé en ce que les vannes de commande de l'écoulement (7) sont montées sous forme d'unités séparées.

10. Appareil selon l'une quelconque des revendications précédentes, caractérisé en ce que la chambre de mélange (3) a des entrées opposées (1, 2) pour les fournitures d'eau chaude et d'eau froide et une sortie d'eau mélangée (4) perpendiculaire aux entrées.

11. Appareil selon la revendication 10, caractérisé en ce que les moyens de détection (18) sont disposés dans la sortie (4).

12. Appareil selon la revendication 10 ou 11, caractérisé en ce que la sortie (4) est adaptée à une connexion avec un équipement sanitaire tel qu'une douche ou un bain.
